(19) Europäisches Patentamt
European Patent Office
Office européen des brevets

(11) **EP 3 377 243 B1**

(12) **EUROPÄISCHE PATENTSCHRIFT**

(45) Veröffentlichungstag und Bekanntmachung des Hinweises auf die Patenterteilung:
**03.07.2024 Patentblatt 2024/27**

(21) Anmeldenummer: **16798086.1**

(22) Anmeldetag: **08.11.2016**

(51) Internationale Patentklassifikation (IPC):
**B21J 15/02** *(2006.01)* **B21J 15/36** *(2006.01)*
**B23P 19/06** *(2006.01)*

(52) Gemeinsame Patentklassifikation (CPC):
**B21J 15/025; B21J 15/36; B23P 19/062**

(86) Internationale Anmeldenummer:
**PCT/EP2016/001847**

(87) Internationale Veröffentlichungsnummer:
**WO 2017/084745 (26.05.2017 Gazette 2017/21)**

(54) **VERFAHREN UND SYSTEM ZUR ERZEUGUNG EINER VERBINDUNG ZWISCHEN EINEM FUNKTIONSELEMENT UND EINEM DÜNNBLECH**

PROCESS AND SYSTEM FOR FORMING A CONNECTION BETWEEN A FUNCTIONAL ELEMENT AND THIN METAL SHEET

PROCÉDÉ ET SYSTÈME POUR RÉALISER UNE CONNECTION ENTRE UN ÉLÉMENT FONCTIONNEL ET UNE TÔLE FINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2015 DE 102015014941**

(43) Veröffentlichungstag der Anmeldung:
**26.09.2018 Patentblatt 2018/39**

(73) Patentinhaber: **Audi AG**
**85045 Ingolstadt (DE)**

(72) Erfinder: **RINTELMANN, Jochen**
**06844 Dessau (DE)**

(56) Entgegenhaltungen:
EP-A2- 0 129 358    EP-B1- 2 314 890
EP-B1- 3 090 188    WO-A1-00/71293
DE-A1-102012 013 829    JP-A- 2006 226 302

• HILL H: "Introduction To the Self-Pierce Riveting Process And Equipment", IBEC. INTERNATIONAL BODY ENGINEERING CONFERENCE, XX, XX, 1 January 1994 (1994-01-01), pages 1-9, XP002956755,

**Beschreibung**

Die Erfindung betrifft ein Verfahren zur Erzeugung einer Verbindung zwischen einem Funktionselement und einem Dünnblech gemäß dem Oberbegriff des Patentanspruchs 1. Ferner betrifft die Erfindung ein System zur Erzeugung einer solchen Verbindung gemäß dem Oberbegriff des Patentanspruchs 3.

Ein gattungsbildendes Verfahren zur Erzeugung einer Verbindung zwischen einem als Stanzniet ausgebildeten Funktionselement und einem einzelnen Blech ist aus der DE 43 33 052 A1 bekannt. Mit einem solchen Stanzniet können auch zwei oder mehrere Metallbleche miteinander verbunden werden. Dieses Funktionselement besteht aus einem Nietkopf, an den sich ein als Hohlzylinder ausgebildeter Nietschaft anschließt, dessen zum Nietkopf abgewandten Stirnseite als Konus ausgebildet ist, wobei dessen Konusflanken leicht gewölbt sind, so dass eine Schneide entsteht, über die der Niet bspw. beim Verbinden von zwei Metallblechen das obere Metallblech durchdringen und in das untere Metallblech eindringen kann.

Zur Herstellung einer solchen aus zwei Metallblechen bestehenden Verbindung mittels eines solchen Nietes sind ein als Oberwerkzeug ausgebildetes Werkzeug und eine als Unterwerkzeug ausgebildete Matrize vorgesehen. Zum Fügen der beiden Metallbleche werden diese auf der Matrize abgelegt und von einem Niederhalter des Werkzeugs mit einer Haltekraft beaufschlagt und anschließend mit einem Stößel der Niet zugeführt und in Richtung einer Vertiefung der Matrize gedrückt. Diese Vertiefung der Matrize weist eine domförmige Erhebung auf, die während des Setzvorganges in den hohlzylinderförmigen Schaftabschnitt des Nietes gedrückt wird und dabei eine Aufweitung dieses Schaftabschnittes unter Bildung eines Hinterschnittes bewirkt.

Auch die DE 10 2012 003 819 A1 beschreibt ein Verfahren zur Erzeugung einer Verbindung zwischen einem als Stanzniet ausgebildeten Funktionselement und einem einzelnen Blechteil. Dieses Funktionsteil umfasst einen Kopfabschnitt mit einem eine Schneide aufweisenden Schneidenfuß, wobei der Schneidenfuß zum durchbrechungsfreien Einstanzen in das Blechteil ausgelegt ist. Der Schneidenfuß ist als hohler Zylinder ausgebildet, der auf seiner äußeren Mantelfläche sich parallel zur Längsrichtung erstreckende Rippen aufweist. Die Innenseite des Schneidenfußes läuft am freien Ende in eine divergierende Kegelstumpf Form aus, die beim Einstanzen in das Blechteil der Aufweitung des Schneidenfußes dient.

Weiterhin beschreibt die EP 1 533 054 A2 ein Verfahren zur Erzeugung einer Verbindung zwischen einem als Stanznietmutter ausgebildeten Funktionselement und einem einzelnen Blechteil. Dieses Funktionselement ist zylinderförmig mit einem ein Innengewinde aufweisenden Abschnitt und einem als Schneidenfuß ausgebildeten weiteren Abschnitt. Beim Einstanzen in das Blechteil wird dieser Schneidenfuß radial nach außen aufgespreizt, ohne das Bauteil zu durchstanzen.

Ferner beschreibt die DE 199 49 161 A1 ein als Nietelement ausgebildetes Funktionselement zum Befestigen an einem plattenförmigen Bauteil. Dieses Funktionselement ist mit einem Funktionsansatz in Form eines Gewindebolzens versehen und besteht aus einem stummelförmigen Fügeabschnitt und einem Bundabschnitt, der zwischen dem Fügeabschnitt und dem Funktionsansatz angeordnet ist. Der Fügeabschnitt ist an seinem Umfang mit einer Hinterschneidung versehen, in die beim Setzvorgang Material des plattenförmigen Bauteiles einfließt, so dass eine Verbindung zwischen dem Funktionselement und dem Bauteil entsteht. Beim Setzvorgang des Funktionselementes bleibt dieses unverformt. Der Fügeabschnitt und ein Teil des Bundabschnittes dringen zwar in das plattenförmige Bauteil ein, ohne jedoch in das Material einzudringen oder es zu durchstanzen. Es kommt lediglich zu einer Verdrängung und Umformung des Materials, so dass ein Restboden von nahezu gleichförmiger Dicke um den Fügeabschnitt herum verbleibt.

Der Nachteil dieser Verfahren besteht darin, dass eine Verwendung von unterschiedlichen Materialien zur Herstellung der Verbindung von Funktionselement und plattenförmigen Bauelement bei Temperaturbelastungen zu Werkstoffspannungen aufgrund unterschiedlicher Temperaturausdehnungskoeffizienten führt, da das Material des Bauteils formschlüssig den Schneidenfuß umschließt und auch formschlüssig an der Unterseite eines Kopfabschnittes des Funktionselementes anliegt. Dieser Effekt tritt insbesondere dann auf, wenn bspw. für das Funktionselement ein Stahlwerkstoff verwendet wird und das plattenförmige Bauelement bspw. aus einem Aluminium besteht.

Aus der DE 10 2011 109 815 A1 ist ein Bolzen zur Verbindung von zwei aneinander liegenden Bauteile bekannt, welcher zur Herstellung der Verbindung mit hoher Geschwindigkeit unter Druck- und Rotationsbeaufschlagung mittels eines Werkzeugs in die Bauteile getrieben wird, so dass eine feste Verbindung durch Reibungserhitzen und lokale Verformung der Bauteilwerkstoffe entsteht. In einem Bereich des Schaftes des Bolzens sind abschnittsweise Erhöhungen und/oder Vertiefungen vorgesehen, die durch einfließen des erhitzten Materials eine Formschluss zwischen dem Bolzen und den Bauteilen herstellen. An den Kopf des Bolzens schließt sich ein zylinderförmiger Abschnitt an, dessen Durchmesser im Vergleich zum Durchmesser des sich daran anschließenden Zylinderabschnittes reduziert ist. Dieser zylinderförmige Abschnitt mit reduziertem Durchmesser bewirkt, dass nach dem Eintreiben des Bolzens in die Bauteile ein geringer Umfangsspalt zwischen diesem zylinderförmigen Abschnitt und dem diesen umgebenden Bauteil entsteht, der die Werkstoffspannungen und die Temperaturbelastungen in diesem Bereich vermindern soll.

Als Nachteil eines solchen Bolzens gemäß der DE 10 2011 109 815 A1 ist jedoch die lokale Schwächung des Bolzens im Bereich des zylinderförmigen Abschnittes mit reduziertem Durchmesser.

Schließlich beschreibt die gattungsgemäße JP 2006-226302 A ein Verfahren zum Herstellen einer Fügeverbindung an überlappend angeordneten dünnen Fügeelementen mittels eines selbststanzenden Stanznietes. Ein solcher Stanzniet weist einen Kopfabschnitt und einen hinterschnittfrei ausgebildeten Schaftabschnitt auf. Die dem Kopfabschnitt abgewandte Stirnseite des Schaftabschnittes weist eine zentrische Vertiefung aus, so dass die verbleibende Stirnfläche eine kreisringförmige Form annimmt. Beim Setzen werden diese Fügeelemente mit ihrem Schaft voraus durch das obere (erste) Fügeteil durchgestanzt und nicht durchstanzend in das untere (zweite) Fügeteil eingedrückt, wobei der Schaft gestaucht und dadurch aufgespreizt wird, so dass sich ein Hinterschnitt ausbildet. Bei diesem Verfahren wird der beim vollständigen Durchstanzen des ersten Fügeteils entstehende Stanzbuzen in das darunterliegende zweite Fügeteil gedrückt und dort eingebettet. Um diese zu erreichen, werden bestimmte Größenverhältnisse einerseits zwischen dem inneren Durchmesser der Vertiefung des Schaftabschnittes und dessen äußeren Durchmesser und andererseits zwischen der Tiefe der Vertiefung des Schaftabschnittes und der Länge des Schaftabschnittes angegeben.

Ausgehend von diesem Stand der Technik ist es Aufgabe der Erfindung ein eingangs genanntes Verfahren zu schaffen, mit welchem bei Temperaturbelastungen eine spannungsfreie Verbindung zwischen einem Funktionselement und einem plattenförmigen Bauteil geschaffen wird. Ferner ist es Aufgabe dieser Erfindung eine Verbindungsstruktur zwischen einem Funktionselement und einem plattenförmigen Bauteil anzugeben.

Die erstgenannte Aufgabe wird gelöst durch ein Verfahren mit den Merkmalen des Patentanspruchs 1.

Mit den Maßgaben hinsichtlich der Fußlänge des Schneidenfußes, des Matrizendurchmessers und der Matrizentiefe der Matrize wird ein definierter Umfangsspalt realisiert. Ein solcher Umfangsspalt in der Art einer Lufttasche wirkt sich positiv auf die Festigkeit einer Stahl-Aluminiumblechverbindung aus, wenn bspw. das Funktionselement aus einem Stahlwerkstoff und ein Aluminiumblech als Bauelement verwendet werden.

Die domförmige Erhebung ermöglicht, dass mit der axialen Vorschubbewegung das Material des Bauteils über die domförmige Erhebung gesteckt wird und die dem Bauteil zugewandte Stirnseite des Kopfabschnittes sich mit der Schneide im Bauteil eingräbt und radial nach außen verdrängt wird. Dadurch dass mit einer solchen domartigen Erhebung in der Vertiefung der Matrize bereits zu Beginn des Setzvorganges eine radiale Materialverdrängung nach außen erreicht wird, können äußerst dünne Bauteile, wie Dünnbleche aus duktilem Material eingesetzt werden.

Weiterhin führt die ballige Vertiefung und ihr als Schneide ausgebildeter Übergang zur Mantelfläche des Schneidenfußes zu einer konstruktiv einfachen Kontur des Funktionselementes und lässt sich daher kostengünstig herstellen.

Gemäß einer Ausführungsform der Erfindung wird der Kopfabschnitt des Funktionselementes mit wenigstens einem dem Bauteil zugewandten Verdrehschutznoppen ausgebildet, der den Umfangsspalt nicht unterbricht. Solche Verdrehschutznoppen verkrallen sich nach dem Eindrücken des Funktionselementes in das Bauteil und führen zu einem optimalen Verdrehschutz.

Die zweitgenannte Aufgabe wird gelöst durch ein System mit den Merkmalen des Patentanspruchs 3.

Vorteilhafte Ausgestaltungen des erfindungsgemäßen Systems sind mit den Merkmalen des abhängigen Patentanspruchs 4 gegeben.

Die Erfindung wird nachfolgend anhand eines Ausführungsbeispiels unter Bezugnahme auf die beigefügten Figuren ausführlich beschrieben. Es zeigen:

Figur 1    eine schematische Darstellung eines Funktionselementes zur Durchführung des erfindungsgemäßen Verfahrens,

Figur 2    eine schematische Darstellung einer Matrize zur Durchführung des erfindungsgemäßen Verfahrens, und

Figur 3    eine schematische Darstellung eines abgeschlossenen Setzvorganges zur Verbindung des Funktionselementes nach Figur 1 mit einem Dünnblech mittels eines Setzwerkzeuges.

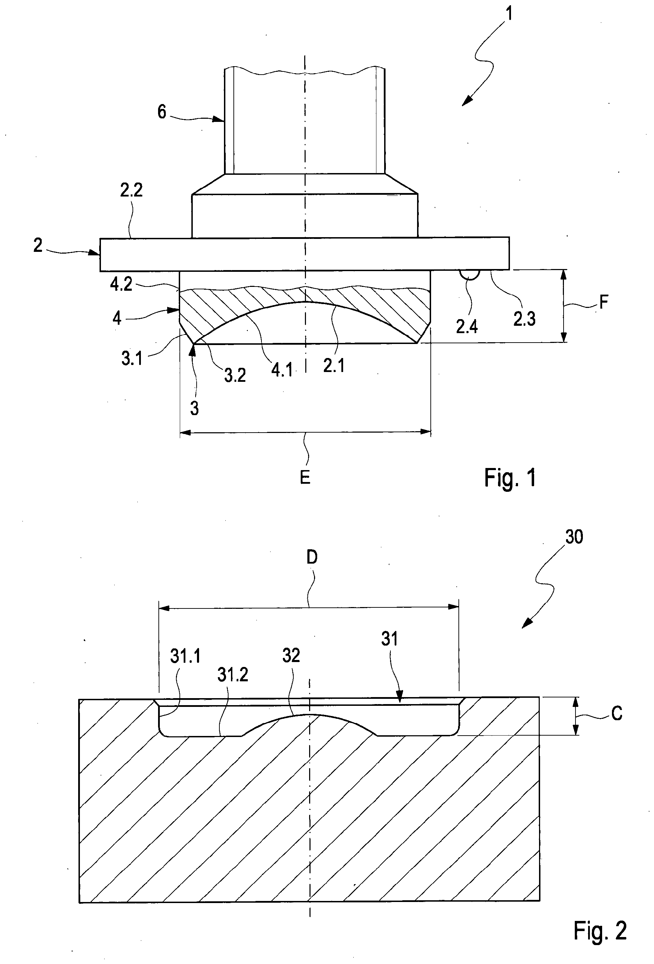

Figur 1 zeigt ein als Einspreiznietbolzen ausgeführtes Funktionselement 1, welches einen Kopfabschnitt 2 aufweist, der auf einer Seite in einen Bolzenabschnitt 6 übergeht und auf der gegenüberliegenden Seite mit einem Schneidenfuß 4 ausgebildet ist. Dieser Schneidenfuß 4 als auch der Bolzenabschnitt 6 ist mit einem gegenüber dem Kopfabschnitt 2 geringeren Durchmesser ausgebildet, so dass ein den Schneidenfuß 4 und den Bolzenabschnitt 6 umlaufender Bund 2.2 entsteht. Der Schneidenfuß 4 weist eine Fußhöhe F und einen Fußdurchmesser E auf.

Der Bolzenabschnitt 6 des Funktionselementes 1 dient als Funktionsansatz und ist bspw. mit einem Außengewinde versehen. Auch könnte dieser Bolzenabschnitt 6 kugelförmig ausgeführt sein, um ein Kugelgelenk mit einem weiteren Bauteil zu bilden.

Auf der Unterseite 2.3 des Bundes 2.2 des Funktionselementes 1 befindet sich wenigstens eine Verdrehschutznoppe 2.4, die zu einer Verdrehsicherung des in das Bauteil 10 eingeformten Funktionselementes 1 führt.

Zur Bildung des Schneidenfußes 4 ist die dem Bolzenabschnitt 6 gegenüberliegende Stirnseite 2.1 des Kopfabschnittes 2 mit einer balligen Vertiefung 4.1 ausgebildet, so dass am Übergang dieser Vertiefung 4.1 zur Mantelfläche 4.2 des Schneidenfußes eine Schneide 3 gebildet wird. Diese Schneide 3 wird von einer äußeren Fase 3.1 und einer inneren Fase 3.2 gebildet. Hierdurch entsteht eine besonders scharfe Schneide 3.

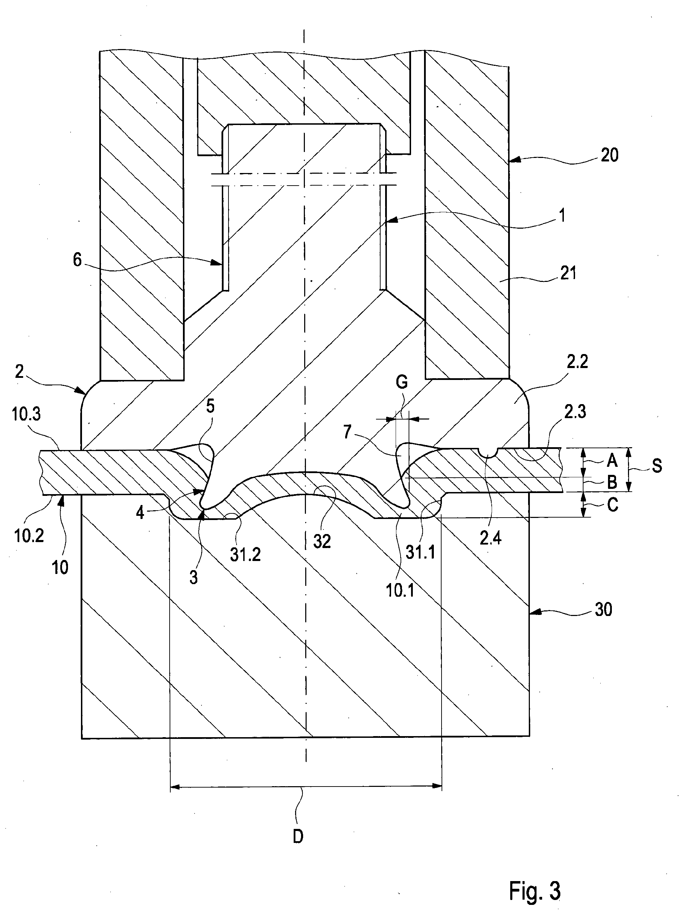

Die Herstellung einer Verbindung eines solchen Einspreiznietbolzens 1 mit einem Dünnblech 10 mit einer Dicke S zeigt Figur 3 nach Abschluss eines mittels einer Setzvorrichtung durchgeführten Setzvorganges.

Nach Figur 3 besteht die Setzvorrichtung aus einem als Oberwerkzeug ausgebildeten Werkzeug 20 mit einem mit Presskraft beaufschlagbaren Stößel 21 und einer als Unterwerkzeug ausgebildeten Matrize 30. Ein Niederhalter des Oberwerkzeuges 20 zum Halten des Dünnbleches 10 auf der Matrize 30 ist in Figur 3 nicht dargestellt. Diese Matrize 30 weist gemäß Figur 2 eine Vertiefung 31 mit einer inneren Umfangswand 31.1 und einer Bodenfläche 31.2 auf, wobei zentrisch auf dieser Bodenfläche 31.2 eine domförmige Erhebung 32 angeordnet ist, so dass die Bodenfläche 31.2 eine Ringnut bildet. Diese Matrize 30 ist in den Figuren 2 und 3 mit einer Matrizentiefe C und einem Matrizendurchmesser D der Vertiefung 31 dargestellt.

Während des Setzvorganges wird mittels des Schneidenfußes 4 mit einer von dem Oberwerkzeug 20 gemäß Figur 3 erzeugten axialen Vorschubbewegung das Material des Dünnbleches 10 in diese Vertiefung 31 der Matrize 30 hinein verformt, so dass unter radialer Spreizung G des Schneidenfußes 4 nach außen eine Hinterschneidung 5 unter Bildung eines Restbodens 10.1 im Dünnblech 10 entsteht. Hierbei wird der Schneidenfuß 4 lediglich in das Material des Dünnbleches 10 eingeformt, ohne dieses Dünnblech 10 zu durchstanzen oder zu perforieren.

Bei diesem Setzvorgang entsteht im Übergangsbereich des Schneidenfußes 4 zur benachbarten Unterseite 2.3 des Bundes 2.2 des Kopfabschnittes 2 ein den Schneidenfuß 4 umlaufender Umfangsspalt 7 in der Art einer Lufttasche, wodurch die unterschiedlichen Wärmeausdehnungen ausgeglichen werden, wenn das Funktionselement 1 aus einem Stahlwerkstoff besteht und für das Dünnblech 10 ein Aluminiumwerkstoff verwendet wird. Dieser Umfangsspalt 7 wird in axialer Richtung des Funktionselementes 1 durch die beim Setzen des Funktionselementes 1 entstehende Hinterschneidung 5 definiert. Der Abstand dieser Hinterschneidung 5 in axialer Richtung des Funktionselementes 1 zur Unterseite 10.2 des Dünnbleches 10 wird als Höhe B bezeichnet, während der Abstand ausgehend von der Hinterschneidung 5 zur Oberseite 10.3 als Höhe A bezeichnet wird. In Summe ergeben die beiden Werte für die Höhe A und B die Dicke S des Dünnbleches 10.

Um diesen Umfangsspalt 7 gezielt und definiert zur realisieren, werden die Werte für die Fußlänge F des Schneidenfußes 4 sowie die Werte für die Matrizentiefe C und den Matrizendurchmesser D der Vertiefung 31 der Matrize 30 in Abhängigkeit der Dicke S des Dünnbleches 10 nach folgender Maßgabe bestimmt:

$$F \leq 2{,}2xS,$$

$$D \leq 2xS+E,$$

und

$$C \leq S,$$

Wobei der Wert für den Fußdurchmesser E des Schneidenfußes 4 vorgegeben ist.

Wird das Funktionselement 1 sowie die zugehörige Matrize 30 entsprechend diesen Werten für die Größen F, D und C realisiert und entsprechend dem beschriebenen Verfahren das Funktionselement 1 in das Dünnblech 10 eingeformt entsteht eine entsprechend Figur 3 dargestellte Verbindungsstruktur, bei welcher der oben beschriebene Umfangsspalt 7 in definierter Weise entsteht. Dabei entsteht für die Werte der Höhe A von Hinterschneidung 5 zur Oberseite 10.3 des Dünnbleches 10 und der Höhe B von Hinterschneidung 5 zur Unterseite 10.2 des Dünnbleches 10 folgende Relation in Abhängigkeit der Dicke S des Dünnbleches 10:

$$A \geq 0{,}7xS,$$

und

$$B \leq 0{,}3xS.$$

Beispielhaft ergeben sich für eine Dicke S des Dünnbleches 10 von 1 mm folgende Werte:

- F = 2,2 mm oder kleiner
- D = 6,4 mm oder kleiner, falls E = 4,4 mm ist,
- C = 1 mm oder kleiner.

Hieraus folgt für die Höhe A und die Höhe B:

- A = 0,7 mm oder größer
- B = 0,3 mm oder kleiner.

Im in Figur 3 dargestellten in das Dünnblech 10 eingeformten Zustand des Funktionselementes 1 verkrallen sich die Verdrehschutznoppen 2.4 in die Oberseite 10.3 des Dünnbleches 10 und führen daher zu einem optimalen Verdrehschutz. Mehrere solcher Verdrehschutznoppen 2.4 sind kreisförmig um den Schneidenfuß 4 auf der Unterseite 2.3 des Bundes 2.2 des Kopfabschnittes 2 angeordnet.

Der für das beschriebene Verfahren verwendete Einspreiznietbolzen 1 könnte auch als Einspreizkugelbolzen, als Einspreizgewindebolzen oder als Einspreizgrobgewindebolzen ausgeführt werden.

**Bezugszeichen**

| | |
|---|---|
| 1 | Funktionselement |
| 2 | Kopfabschnitt |
| 2.1 | Stirnseite des Kopfabschnittes 2 |
| 2.2 | Bund des Kopfabschnittes 2 |
| 2.3 | Unterseite des Bundes 2.2 |
| 2.4 | Verdrehschutznoppe |
| 3 | Schneide |
| 3.1 | äußere Fase |
| 3.2 | innere Fase |
| 4 | Schneidenfuß |
| 4.1 | ballige Vertiefung |
| 4.2 | Mantelfläche des Schneidenfußes 4 |
| 5 | Hinterschneidung |
| 6 | Bolzenabschnitt des Funktionselementes 1 |
| 7 | Umfangsspalt |
| 10 | Dünnblech |
| 10.1 | Restboden des Bauteils 10 |
| 20 | Oberwerkzeug, Werkzeug |
| 21 | Stößel des Oberwerkzeuges 20 |
| 30 | Unterwerkzeug, Matrize |
| 31 | Vertiefung der Matrize 30 |
| 31.1 | innere Umfangswand der Vertiefung 31 |
| 31.2 | Bodenfläche der Vertiefung 31 |
| 32 | domförmige Erhebung |

**Patentansprüche**

1.  Verfahren zur Erzeugung einer Verbindung zwischen einem einen Kopfabschnitt (2) und eine Schneide (3) aufweisenden Funktionselement (1) und einem Dünnblech (10) mit einer Dicke (S), bei welchem

    - der Kopfabschnitt (2) des Funktionselementes (1) mit einem die Schneide (3) aufweisenden Schneidenfuß (4) mit einer Fußlänge (F) und einem vorgegebenen Fußdurchmesser (E) ausgebildet wird,
    - mit einem an dem Funktionselement (1) angreifenden Werkzeug (20) mit einer von demselben erzeugten axialen Vorschubbewegung das Material des Dünnblechs (10) mittels des Schneidenfußes (4) in eine Vertiefung (31) einer Matrize (30) hinein verformt wird, so dass unter radialer Spreizung (G) des Schneidenfußes (4) eine Hinterschneidung (5) gebildet wird, wobei der Schneidenfuß (4) in das Dünnblech (10) eingedrückt wird, ohne das Dünnblech (10) zu durchdringen,
    - die Vertiefung (31) der Matrize (30) mit einer Matrizentiefe (C) und einem Matrizendurchmesser (D) ausgebildet wird, und
    - eine Bodenfläche (31.2) der Vertiefung (31) der Matrize (30) mit einer domförmigen Erhebung (32) ausgebildet wird,
**dadurch gekennzeichnet, dass**
- der Kopfabschnitt (2) auf einer Seite mit einem Bolzenabschnitt (6) und auf der gegenüberliegenden Seite mit dem Schneidenfuß (4) ausgebildet wird, wobei zur Bildung eines den Schneidenfuß (4) und den Bolzenabschnitt (6) umlaufenden Bundes (2.2) der Schneidenfuß (4) und der Bolzenabschnitt (6) mit einem gegenüber dem Kopfabschnitt (2) geringeren Durchmesser ausgebildet wird,
- zur Bildung des Schneidenfußes (4) die dem Bolzenabschnitt (6) gegenüberliegende Stirnseite (2.1) des Kopfabschnittes (2) mit einer balligen Vertiefung (4.1) ausgebildet wird, wobei an einem Übergang der Vertiefung (4.1) zu einer Mantelfläche (4.2) des Schneidenfußes (4) die Schneide (3) gebildet wird, und
- ein den Schneidenfuß (4) im Übergang zum Kopfabschnitt (2) umlaufender Umfangsspalt (7) gebildet wird, indem die Fußlänge (F) des Schneidenfußes (4) sowie der Matrizendurchmesser (D) und die Matrizentiefe (C) der Matrize (30) in Abhängigkeit der vorgegebenen Dicke (S) des Dünnblechs (10) nach folgender Maßgabe gewählt werden:

$$F \le 2{,}2 \times S$$

$$D \le 2 \times S + E$$

$$C \le S.$$

2.  Verfahren nach Anspruch 1,
    **dadurch gekennzeichnet, dass** der Kopfabschnitt (2) mit wenigstens einem dem Dünnblech (10) zugewandten Verdrehschutznoppen (2.4) ausgebildet wird.

3.  System zur Erzeugung einer Verbindung zwischen einem einen Kopfabschnitt (2) und eine Schneide (3) aufweisenden Funktionselement (1) und einem Dünnblech (10) mit einer Dicke (S), bestehend aus

    - dem Dünnblech (10) und dem Funktionselement (1), wobei der Kopfabschnitt (2) des Funktionselementes (1) mit einem die Schneide (3) aufweisenden Schneidenfuß (4) mit einer Fußlänge (F) und einem vorgegebenen Fußdurchmesser (E) ausgebildet ist,
    - einer Matrize (30) und einem Werkzeug (20), wobei das Werkzeug geeignet ist, um an dem Funktionselement (1) anzugreifen und eine axiale Vorschubbewegung zu erzeugen, um das Material des Dünnblechs (10) mittels des Schneidenfußes (4) in eine Vertiefung (31) der Matrize (30) hinein zu verformen, so dass unter radialer Spreizung (G) des Schneidenfußes (4) eine Hinterschneidung (5) gebildet wird, wobei der Schneidenfuß (4) in das Dünnblech (10) eingedrückt wird, ohne das Dünnblech (10) zu durchdringen, wobei

- die Vertiefung (31) der Matrize (30) mit einer Matrizentiefe (C) und einem Matrizendurchmesser (D) ausgebildet ist, und

- eine Bodenfläche (31.2) der Vertiefung (31) der Matrize (30) mit einer domförmigen Erhebung (32) ausgebildet ist,

**dadurch gekennzeichnet, dass**

- der Kopfabschnitt (2) auf einer Seite mit einem Bolzenabschnitt (6) und auf der gegenüberliegenden Seite mit dem Schneidenfuß (4) ausgebildet ist, wobei zur Bildung eines den Schneidenfuß (4) und den Bolzenabschnitt (6) umlaufenden Bundes (2.2) der Schneidenfuß (4) und der Bolzenabschnitt (6) mit einem gegenüber dem Kopfabschnitt (2) geringeren Durchmesser ausgebildet ist,

- zur Bildung des Schneidenfußes (4) die dem Bolzenabschnitt (6) gegenüberliegende Stirnseite (2.1) des Kopfabschnittes (2) mit einer balligen Vertiefung (4.1) ausgebildet ist, wobei an einem Übergang der Vertiefung (4.1) zu einer Mantelfläche (4.2) des Schneidenfußes (4) die Schneide (3) gebildet ist, und

- um einen den Schneidenfuß (4) im Übergang zum Kopfabschnitt (2) umlaufenden Umfangsspalt (7) zu bilden, die Fußlänge (F) des Schneidenfußes (4) sowie der Matrizendurchmesser (D) und die Matrizentiefe (C) der Matrize (30) in Abhängigkeit der vorgegebenen Dicke (S) des Dünnblechs (10) nach folgender Maßgabe gewählt sind:

$$F \leq 2{,}2 \times S$$

$$D \leq 2 \times S + E$$

$$C \leq S.$$

**4.** System nach Anspruch 3,
**dadurch gekennzeichnet, dass** der Kopfabschnitt (2) mit wenigstens einem dem Dünnblech (10) zugewandten Verdrehschutznoppen (2.4) ausgebildet ist.

**Claims**

**1.** Method for forming a connection between a functional element (1) having a head section (2) and a blade (3) and a thin metal sheet (10) having a thickness (S), in the case of which

- the head section (2) of the functional element (1) is formed with a cutting foot (4) having the blade (3) having a foot length (F) and a predetermined foot diameter (E),
- having a tool (20) engaging on the functional element (1) having an axial forward thrust movement generated by said tool, the material of the thin metal sheet (10) is deformed by means of the cutting foot (4) into an indentation (31) of a mold (30), such that when the cutting foot (4) is radially spread (G) an undercut (5) is formed, wherein the cutting foot (4) is pressed into the thin metal sheet (10) without penetrating through the thin metal sheet (10),
- the indentation (31) of the mold (30) is formed with a mold depth (C) and a mold diameter (D), and
- a base surface (31.2) of the indentation (31) of the mold (30) is formed with a mandrel-shaped elevation (32),

**characterised in that**

- the head section (2) is formed on one side with a bolt section (6) and on the opposite side with the cutting foot (4), wherein for the formation of a band (2.2) surrounding the cutting foot (4) and the bolt section (6), the cutting foot (4) and the bolt section (6) are formed with a smaller diameter than the head section (2),
- for the formation of the cutting foot (4), the end face (2.1), opposite to the bolt section (6), of the head section (2) is formed with a concave indentation (4.1), wherein the blade (3) is formed at a transition of the indentation (4.1) to a casing surface (4.2) of the cutting foot (4), and
- a peripheral gap (7) surrounding the cutting foot (4) in the transition to the head section (2) is formed **in that** the foot length (F) of the cutting foot (4) and the mold diameter (D) and the mold depth (C) of the mold (30) are selected as a function of the predetermined thickness (S) of the thin metal sheet (10) according to the following stipulation:

-

$$F \leq 2.2 \times S$$

-

$$D \le 2xS+E$$

-

$$C \le S.$$

2. Method according to claim 1, **characterised in that** the head section (2) is designed having at least one anti-rotation stud (2.4) facing the thin metal sheet (10).

3. System for forming a connection between a functional element (1) having a head section (2) and a blade (3) and a thin metal sheet (10) having a thickness (S), consisting of

- the thin metal sheet (10) and the functional element (1), wherein

the head section (2) of the functional element (1) is formed with a cutting foot (4) having the blade (3) having a foot length (F) and a predetermined foot diameter (E),

- a mold (30) and a tool (20), wherein the tool is suitable for engaging on the functional element (1) and generating an axial forward thrust movement, in order to deform the material of the thin metal sheet (10) by means of the cutting foot (4) into an indentation (31) of the mold (30), such that when the cutting foot (4) is radially spread (G) an undercut (5) is formed, wherein the cutting foot (4) is pressed into the thin metal sheet (10) without penetrating through the thin metal sheet (10), wherein
- the indentation (31) of the mold (30) is formed with a mold depth (C) and a mold diameter (D), and
- a base surface (31.2) of the indentation (31) of the mold (30) is formed with a mandrel-shaped elevation (32),

**characterised in that**

- the head section (2) is formed on one side with a bolt section (6) and on the opposite side with the cutting foot (4), wherein for the formation of a band (2.2) surrounding the cutting foot (4) and the bolt section (6), the cutting foot (4) and the bolt section (6) are formed with a smaller diameter than the head section (2),
- for the formation of the cutting foot (4), the end face (2.1), opposite to the bolt section (6), of the head section (2) is formed with a concave indentation (4.1), wherein the blade (3) is formed at a transition of the indentation (4.1) to a casing surface (4.2) of the cutting foot (4), and
- in order to form a peripheral gap (7) surrounding the cutting foot (4) in the transition to the head section (2), the foot length (F) of the cutting foot (4) and the mold diameter (D) and the mold depth (C) of the mold (30) are selected as a function of the predetermined thickness (S) of the thin metal sheet (10) according to the following stipulation:

-

$$F \le 2.2xS$$

-

$$D \le 2xS+E$$

-

$$C \le S.$$

4. System according to claim 3, **characterised in that** the head section (2) is designed having at least one anti-rotation stud (2.4) facing the thin metal sheet (10).

**Revendications**

1. Procédé de réalisation d'une liaison entre un élément fonctionnel (1) présentant une section de tête (2) et un tranchant (3) et une tôle mince (10) avec une épaisseur (S), dans lequel

- la section de tête (2) de l'élément fonctionnel (1) est réalisée avec un pied de coupe (4) présentant le tranchant (3) avec une longueur de pied (F) et un diamètre de pied (E) prédéterminé,
- le matériau de la tôle mince (10) est déformé dans un évidement (31) d'une matrice (30) au moyen du pied de coupe (4) avec un outil (20) agissant sur l'élément fonctionnel (1) avec un mouvement d'avance axial généré par celui-ci, de sorte qu'une contre-dépouille (5) soit formée avec l'écartement radial (G) du pied de coupe (4), dans lequel le pied de coupe (4) est enfoncé dans la tôle mince (10) sans pénétrer dans la tôle mince (10),
- l'évidement (31) de la matrice (30) est réalisé avec une profondeur de matrice (C) et un diamètre de matrice (D), et
- une surface de fond (31.2) de l'évidement (31) de la matrice (30) est réalisée avec une élévation en forme de dôme (32),

**caractérisé en ce que**

- la section de tête (2) est réalisée d'un côté avec une section de boulon (6) et sur le côté opposé avec le pied de coupe (4), dans lequel, pour former un collet (2.2) entourant le pied de coupe (4) et la section de boulon (6), le pied de coupe (4) et la section de boulon (6) sont formés avec un diamètre plus petit que celui de la section de tête (2),

- pour former le pied de coupe (4), la face frontale (2.1) de la section de tête (2) opposée à la section de boulon (6) est réalisée avec un évidement bombé (4.1), dans lequel le tranchant (3) est formé au niveau d'une transition de l'évidement (4.1) vers une surface d'enveloppe (4.2) du pied de coupe (4), et

- une fente périphérique (7) entourant le pied de coupe (4) dans la transition vers la section de tête (2) est formée **en ce que** la longueur de pied (F) du pied de coupe (4) ainsi que le diamètre de matrice (D) et la profondeur de matrice (C) de la matrice (30) sont sélectionnés en fonction de l'épaisseur (S) prédéterminée de la tôle mince (10) selon les conditions suivantes :

-

$$F \leq 2,2xS$$

-

$$D \leq 2xS+E$$

-

$$C \leq S.$$

2. Procédé selon la revendication 1,
**caractérisé en ce que** la section de tête (2) est réalisée avec au moins un plot anti-torsion (2.4) tourné vers la tôle mince (10).

3. Système de réalisation d'une liaison entre un élément fonctionnel (1) présentant une section de tête (2) et un tranchant (3) et une tôle mince (10) avec une épaisseur (S), consistant en

- la tôle mince (10) et l'élément fonctionnel (1), dans lequel

la section de tête (2) de l'élément fonctionnel (1) est réalisée avec un pied de coupe (4) présentant le tranchant (3) avec une longueur de pied (F) et un diamètre de pied (E) prédéterminé,

- une matrice (30) et un outil (20), dans lequel l'outil est adapté pour s'engager sur l'élément fonctionnel (1) et pour générer un mouvement d'avance axial pour déformer le matériau de la tôle mince (10) au moyen du pied de coupe (4) dans un évidement (31) de la matrice (30), de sorte qu'une contre-dépouille (5) soit formée avec l'écartement radial (G) du pied de coupe (4), dans lequel le pied de coupe (4) est enfoncé dans la tôle mince (10) sans pénétrer dans la tôle mince (10), dans lequel

- l'évidement (31) de la matrice (30) est réalisé avec une profondeur de matrice (C) et un diamètre de matrice (D), et

- une surface de fond (31.2) de l'évidement (31) de la matrice (30) est réalisée avec une élévation en forme de dôme (32),

**caractérisé en ce que**

- la section de tête (2) est réalisée d'un côté avec une section de boulon (6) et sur le côté opposé avec le pied de coupe (4), dans lequel, pour former un collet (2.2) entourant le pied de coupe (4) et la section de boulon (6), le pied de coupe (4) et la section de boulon (6) sont réalisés avec un diamètre plus petit que celui de la section de tête (2),

- pour former le pied de coupe (4), la face frontale (2.1) de la section de tête (2) opposée à la section de boulon (6) est réalisée avec un évidement bombé (4.1), dans lequel le tranchant (3) est formé au niveau d'une transition de l'évidement (4.1) vers une surface d'enveloppe (4.2) du pied de coupe (4), et

- pour former une fente périphérique (7) entourant le pied de coupe (4) dans la transition vers la section de tête (2), la longueur de pied (F) du pied de coupe (4) ainsi que le diamètre de matrice (D) et la profondeur de matrice (C) de la matrice (30) sont sélectionnés en fonction de l'épaisseur (S) prédéterminée de la tôle mince (10) selon les conditions suivantes :

- $F \leq 2,2xS$
- $D \leq 2xS+E$
- $C \leq S.$

4. Système selon la revendication 3,
**caractérisé en ce que** la section de tête (2) est réalisée avec au moins un plot anti-torsion (2.4) tourné vers la tôle mince (10).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4333052 A1
- DE 102012003819 A1
- EP 1533054 A2
- DE 19949161 A1
- DE 102011109815 A1
- JP 2006226302 A